# EUROPEAN PATENT SPECIFICATION

(11) **EP 3 841 011 B1**
(45) Date of publication and mention of the grant of the patent: **07.06.2023**
(21) Application number: 18782230.9
(22) Date of filing: 21.08.2018
(51) Int. Cl.: B64C 25/48

(54) **DECELERATION FEEDBACK SYSTEM AND ALGORITHM**
VERZÖGERUNGSRÜCKKOPPLUNGSSYSTEM UND ALGORITHMUS
SYSTÈME ET ALGORITHME DE RÉTROACTION DE DÉCÉLÉRATION

(43) Date of publication of application: 30.06.2021
(73) Proprietor: MEGGITT AIRCRAFT BRAKING SYSTEMS CORPORATION, Ohio 44306 (US)
(72) Inventor: WHITTINGHAM, Andrew, Coventry CV6 2EF (GB)
(74) Representative: Rückerl, Florian
(86) International application number: PCT/US2018/047288
(87) International publication number: WO 2020/040746

(56) References cited:
- EP-A2- 0 742 143
- GB-A- 2 292 195
- US-A- 5 024 491
- US-A1- 2006 186 736
- US-A1- 2009 276 133
- US-A1- 2011 153 176
- US-B2- 8 403 429

## Description

### TECHNICAL FIELD

The invention herein resides in the art of aircraft braking systems for controlling aircraft deceleration upon landing. More particularly, the invention provides a system with an algorithm that regulates brake pressure demand to control the aircraft deceleration at a required level. More specifically, the invention relates to an aircraft braking system and associated algorithm that prevents the aircraft brakes from releasing to clearance during a braking operation, while maintaining differential pilot/co-pilot braking inputs.

### BACKGROUND OF THE INVENTION

It is known to employ deceleration feedback algorithms in aircraft braking systems. These prior art systems employ a method for controlling aircraft deceleration based on the magnitude of the pilot and/or co-pilot brake pedal input. The algorithm of such systems works by essentially reducing the pilot/co-pilot pressure demand to the degree necessary to control the aircraft deceleration at a required level. The required deceleration from the pedal inputs is derived from the maximum pedal input or average pedal inputs, depending upon the system implementation. Notably, the algorithm cannot apply pressure demand above the pilot/co-pilot pedal demand. This ensures that undemanded or more-than-demanded braking conditions do not occur.

Prior art aircraft braking systems and deceleration algorithms do not contemplate conditions where the deceleration is significantly impacted by non-braking activities. In situations where the aircraft deceleration due to secondary means, such as aerodynamic drag or reverse thrust is greater than the required deceleration derived from the pedal input of the pilot/co-pilot, the controller will reduce the pressure demand in an attempt to compensate and maintain the required deceleration. In these known systems, it is feasible for the pressure demand to reduce to an extent that it is below the brake ineffective pressure. In aircraft employing a brake heat stack of alternatingly interleaved stator and rotor discs, the release of brake pressure will be sufficient to allow the discs to "go into clearance" such that the brake disc heat stack generates no torque or drag.

Of course, when brakes go into clearance, the pilot/co-pilot are not only without the "feel" of braking activity, but are also without the ability to manipulate/steer the aircraft as is customary with differential braking inputs. Both are undesirable situations. Moreover, it is desirable that the pilot/co-pilot experiences the same "feel" of the aircraft when effecting braking whether the aircraft cargo is full or empty-whether the landing aircraft is then heavy or light.

US 8,403,429 B2 discloses a method for braking an aircraft. This method differs from the present invention in that the brakes do not comprise brake disc heat stacks and the controlling of brake pressure is carried out while precluding the discs of the heat stacks from going into separation as a consequence of non-braking activities.

The US patent application US 2006/186736 A1 discloses a method for reducing brake wear of carbon brakes for aircraft, and more particularly relates to a method for reducing brake wear of aircraft carbon brakes by maintaining a light residual clamping force of the carbon brakes when braking is no longer commanded, to prevent release of the carbon brakes, without otherwise affecting normal braking.

The European patent application EP 0 742 143 A2 discloses a method involving filling a braking system with a set amount of hydraulic fluid selected to bring a breaking mechanism to a point of brake stack closure. An instantaneous aircraft deceleration is then determined followed by determining deceleration error by comparing measured aircraft deceleration with a set aircraft deceleration.

The patent application GB 2 292195 A discloses a brake control system comprising first means for providing a signal related to required deceleration, second means for providing a signal related to actual deceleration, and processor means to operate on an error signal related to the difference between the signals from said first and second means, said processor means providing an output signal in response to which the control system is operable to increase or decrease the braking effect, wherein the processor means provides a variable characteristic between output and input signals.

### DISCLOSURE OF INVENTION

In light of the foregoing, it is a first aspect of the invention to provide an algorithm for an aircraft brake control system that prevents the discs of the brake heat stack from going into clearance under the action of the deceleration control algorithm.

Another aspect of the invention is the provision of an algorithm for an aircraft brake control system that prevents the brakes from going into clearance while maintaining any desired differential pilot/co-pilot braking inputs.

A further aspect of the invention is the provision of an algorithm for an aircraft brake control system in which a minimum demand variable is produced as a function of the minimum pedal displacement and such minimum demand variable is used to calculate a minimum output for the pressure demands of both the left and right pedals.

Yet another aspect of the invention is the provision of an algorithm for an aircraft brake control system in which the minimum pedal demand will result in the output being limited to the calculated minimum demand.

Still another aspect of the invention is the provision of an algorithm for an aircraft brake control system in which the higher pedal demand is limited to the calculated minimum demand plus an increment determined by the difference between the two pedal demands multiplied by a factor, thus maintaining differential pilot/co-pilot braking input while allowing for the difference to be reduced by a factor in order to limit the absolute pressure difference.

Still a further aspect of the invention is the provision of an algorithm for an aircraft brake control system, which is readily adapted to presently existing brake control systems.

The foregoing and other aspects of the invention which will become apparent as the detailed description proceeds are achieved by a method defined in the independent claim for braking an aircraft having right and left brake disc heat stacks controlled by right and left brake pedals, comprising: determining an actual rate of deceleration of the aircraft; calculating a required rate of deceleration of the aircraft; making a comparison of the actual and required rates of deceleration of the aircraft; and controlling the application and release of brake pressure to the right and left brakes of the aircraft as a function of said comparison while precluding the discs of the heat stacks from going into separation as a consequence of non-braking activities, wherein controlling the application and release of brake pressure further includes establishing a minimum brake pressure that ensures the capability of differential braking between the right and left brake pedals and associated right and left brakes. Preferred embodiments form the subject-matter of dependent claims.

### BRIEF DESCRIPTION OF THE DRAWINGS

For a complete understanding of the various aspects of the invention, reference should be made to the following detailed description and accompanying drawings wherein:
Fig. 1 is a schematic block diagram of an aircraft brake control system employing the methodology of the invention;
Fig. 2 is a deceleration feedback flowchart as may be employed by the controller of Fig. 1;
Fig. 3 is a detailed flowchart calculating the output demand for the left and right brake from the flowchart of Fig. 2;
Fig. 4 is a graph chart showing the relationship between pedal displacement and pressure demand in a representative embodiment of the invention; and
Fig. 5 is a graph chart showing the relationship between pedal displacement and required deceleration according to an embodiment of the invention.

### DETAILED DESCRIPTION OF PREFERRED EMBODIMENT

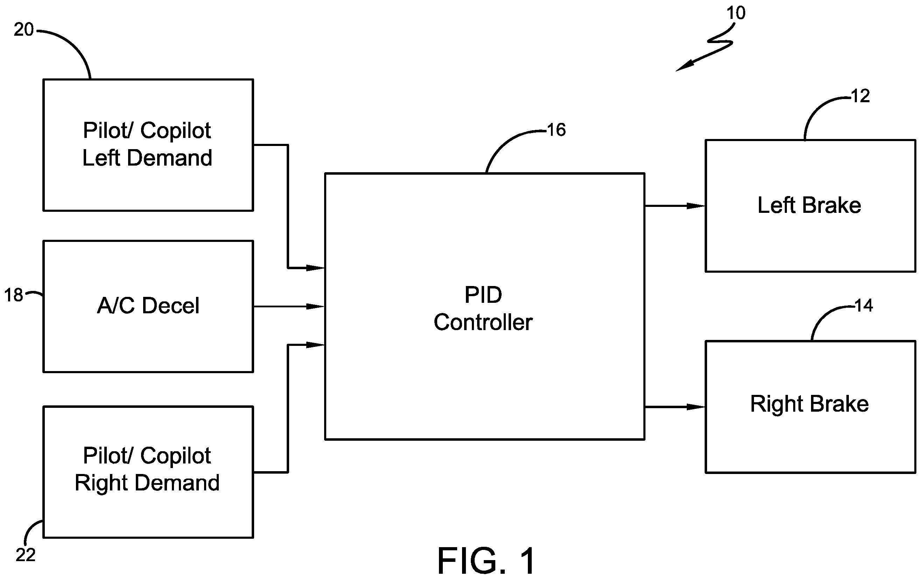

Referring now to the drawings and more particularly to Fig. 1, it can be seen that an aircraft brake control system of the type adaptive to employment with the instant invention is designated generally by the numeral 10. The brake control system 10 is shown in very illustrative form as servicing a left brake 12 and a right brake 14 of an aircraft. Those skilled in the art will readily appreciate that the concept of the invention is adaptable to any of numerous aircraft brake assemblies with multiple wheels and brakes on the various landing gears. For simplicity of explanation, only the most basic structure of the brake control system 10 is presented herein.

Those skilled in the art will appreciate that the left and right brakes 12, 14 would typically comprise alternately interleaved stator and rotor discs maintained between a pressure plate and an endplate and activated by either hydraulic pistons or motor-controlled mechanical pistons to effect a desired force or pressure on the brake disc stack interposed between the pressure plate and endplate.

While the concept of the invention is applicable to both hydraulic and electric brake assemblies, for purposes of operative description the discussion herein is given with regard to a hydraulic brake control system. In such case, a PID controller 16 is interconnected with the left and right brakes 12, 14 to regulate the application and release of brake pressure through appropriate valves to the hydraulic pistons. Those skilled in the art will appreciate that a PID controller is a sophisticated brake control system that provides both proportional, integral, and derivative control signals to accommodate both instantaneous (proportional), historical (integral), and anticipated (derivative) control signals.

The controller 16 is connected to a decelerometer 18, providing signals corresponding to the instantaneous deceleration rate of the aircraft. While the decelerometer 18 may be provided as a self-contained element, it is also contemplated that the instantaneous wheel speed of the aircraft may be obtained from wheel speed transducers, with those wheel speed signals being differentiated with respect to time in order to determine the instantaneous deceleration.

The pilot/co-pilot of the aircraft are provided with brake pedals to allow them to effect braking of the aircraft consistent with the restrictions of the controller 16. Each of the pilot and co-pilot is provided with a left pedal and a right pedal, generating a signal corresponding to the deceleration demand for the aircraft. The differential between the signal outputs of the left demand pedal 20 and the right demand pedal 22 accommodates steering of the aircraft as is well known to those skilled in the art.

It will also be appreciated that the use to which the pilot/co-pilot demand signals 20, 22 are employed may differ from one aircraft to another. In some systems, the controlling output signals to the controller 16 are those of the greater demand as between the pilot and co-pilot, while other systems employ an average of the demand of the pilot and co-pilot output signals. Alternatively, the co-pilot signals may be employed upon failure of the pilot signals to satisfy any predetermined criteria.

The method of the invention as employed by the controller 16 will now be presented in detail with regard to representative braking scenarios that might be encountered by an aircraft employing the system of Fig. 1 and practicing the method of the invention. Significant points and features include the following:

1. The final pressure demand calculated after the deceleration feedback algorithm practiced by the controller 16 cannot exceed the Pedal Displacement vs. Pressure Demand characteristic. This prevents undemanded/more-than-demanded braking conditions.

2. The calculated deceleration feedback signal is subtracted from the calculated pressure demand as determined from the Pedal Displacement vs. Pressure Demand curve. Accordingly, an increasing deceleration demand equates to a reducing pressure demand.

3. The deceleration feedback algorithm of the controller 16 provides limited authority. For example, the magnitude of the calculated deceleration feedback signal for a 3,000 psi [20.7 MPa] system would be limited to being between 0 and 1,500 psi [10.3 MPa] equivalent pressure.

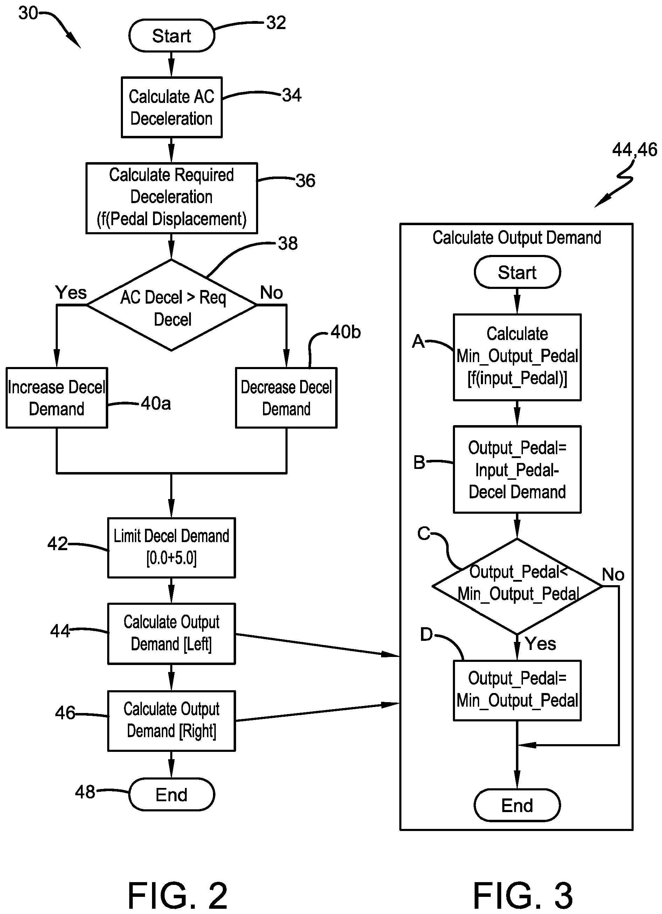

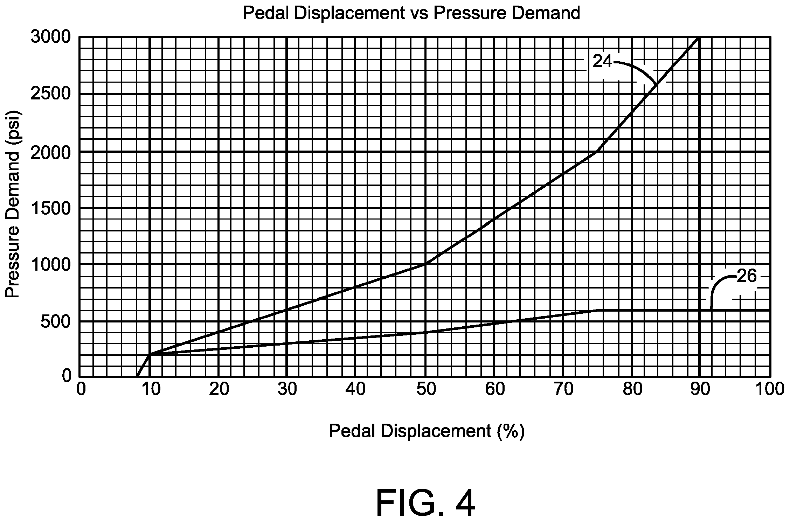

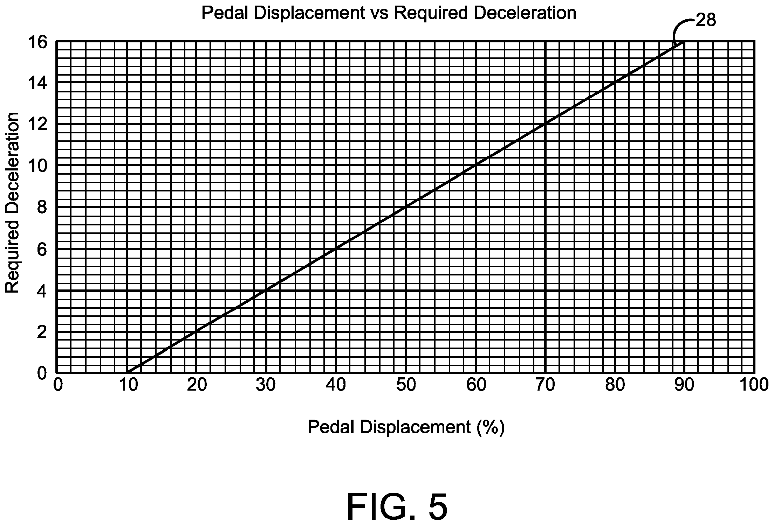

The PID controller 16 practices the deceleration feedback flowchart of Figs. 2 and 3. The operation and control achieved thereby is apparent from the following three examples for which the following parameters apply. The left pedal demand is at 75%. The graph 24 of Fig. 4 shows a typical relationship between pedal displacement and pressure demand. A 75% pedal displacement equates to a demand of 2,000 psi [13.8 MPa]. With the right pedal demand being at 50%, referring again to the graph 24 of Fig. 4, it can be seen that the right pedal is demanding 1,000 psi [6.9 MPa]. Finally, the required deceleration demand is based on the maximum pedal demand (left pedal) and, with recourse to the graph 28 of Fig. 5, it can be seen that 75% equates to a required deceleration rate of approximately 13 ft/s/s [3.96 m/s/s].

Against these parameters, the following examples are instructive as to the methodology of the invention:

### Example I

During a braking run, the aircraft deceleration is calculated by the decelerometer 18 as being 15 ft/s/s [4.57 m/s/s] and is heavily influenced by reverse thrust. Hence, reducing brake pressure does not significantly change the aircraft deceleration rate. With reference to Figs. 2 and 3, an appreciation of the methodology of the invention can be obtained for this set of parameters. The deceleration feedback flowchart is designated by the numeral 30 and begins at 32 with the calculation or determination of the aircraft deceleration as at 34. As presented in Fig. 1, aircraft deceleration may either be calculated by taking the derivative with respect to time of aircraft speed or velocity, or it may be obtained directly from a decelerometer. At 36, the determination is made from the relationship of Fig. 5 that the required deceleration, as determined as a function of pedal displacement, is 13 ft/s/s [3.96 m/s/s], as presented above. At decision block 38, it is determined that aircraft deceleration is indeed greater than the required deceleration and the PID controller is caused to ramp up in order to increase deceleration demand, which equates to reducing pressure demand as at 40a. Assuming this reduction in pressure demand has limited or no effect on the aircraft deceleration, this reduction will continue until the controller 16 saturates at +5.0. Assuming that a full-scale demand of 10 equates to 3,000 psi [20.7 MPa], this is equivalent to the 1,500 psi [10.3 MPa] presented above.

The process then enters into subroutines for calculating the output demand (left) at 44 and calculating the output demand (right) at 46. These subroutines are the same and are set forth with particularity in Fig. 3. For the left pressure demand, the output pressure demand is determined with recourse to graph 26 of Fig. 4, which shows the minimum pressure demand characteristic as correlated with the percent of pedal displacement. With recourse to graph 26, block A of the subroutine of Fig. 3 determines that a 75% pedal displacement equates to 600 psi [4.14 MPa] as the minimum pressure demand. At block B, the output pedal demand is calculated by subtracting from the input pedal (2,000 psi [13.8 MPa]) the deceleration feedback (1,500 psi[10.3 MPa]), equating to 500 psi [3.45 MPa].

At decision block C, since the output pedal is less than the minimum pressure demand, the output pedal is set at D to the minimum pressure demand of 600 psi [4.14 MPa].

For the right pressure demand, the output demand is calculated at block A by making recourse to the graph 26 where a 50% pedal displacement correlates to 400 psi [2.76 MPa]. At block B, the output pedal demand is determined by subtracting the deceleration feedback (1,500 psi [10.3 MPa]) from the input pedal (1,000 psi [6.9 MPa]), for a negative 500 psi (-500 psi) [negative 3.45 MPa (-3.45 MPa)]. At decision block C, the output pedal is less than the minimum pressure demand and, hence, the output pedal is set to the minimum pressure demand of 400 psi 2.76 MPa].

Accordingly, in this example, although the aircraft is decelerating more than the required rate, the output pressure demand is prevented from reducing below the minimum pressure demand, thus maintaining some level of braking and preventing the brake discs from going into clearance.

### Example II

Assume the pedal inputs as presented above, but during the braking run the aircraft deceleration is calculated as 10 ft/s/s [3.05 m/s/s]. With reference to the flowchart 30 of Fig. 2, in a situation such as this the decision block 38 will determine that the aircraft deceleration is not greater than the required deceleration and the PID controller 16 will ramp down to decrease the deceleration demand at 40b. Since the deceleration feedback controller is limited between zero and +5.0 at 42, it will hence be limited to zero since the calculated aircraft deceleration at 34 does not exceed the required deceleration at 36. At 44, the output demand (left) is calculated following the process of Fig. 3. At block A, it is determined from the graph 26 that the minimum pressure demand at 75% pedal displacement is 600 psi [4.14 MPa]. At block B, the output pedal demand is determined by subtracting the deceleration feedback (zero psi [zero MPa]) from the input pedal demand (2,000 psi [13.8 MPa]), setting the output pedal demand to 2,000 psi [13.8 MPa]. At decision block C, the output pedal demand is found to be greater than the minimum pressure demand and, hence, the output pedal is set to the calculated output pressure demand of 2,000 psi [13.8 MPa].

For the right pressure demand, at block A the minimum pressure demand at 50% pedal displacement is found to be 400 psi [2.76 MPa] from the graph 26 at Fig. 4. At block B, the output pedal demand is calculated as the input pedal demand (1,000 psi [6.9 MPa]) minus the deceleration feedback (zero psi [zero MPa]) for an output pedal demand of 1,000 psi [6.9 MPa]. At decision block C, since the output pedal is greater than the minimum pressure demand, the output pedal is set to the minimum pressure demand of 1,000 psi [6.9 MPa].

As can be seen from the foregoing, the deceleration controller has no effect on the output pressure demand for this example.

### Example III

Again, the pedal inputs are the same as in Examples I and II. Here, during the initial part of the braked run of the aircraft, the aircraft deceleration is influenced by aerodynamic drag and the calculated deceleration is 15 ft/s/s [4.57 m/s/s], but it does reduce as pressure demand is reduced.

With reference to the flowchart of Figs. 2 and 3, it will be seen that the decision at 38 is "YES" and the deceleration feedback PID controller 16 will ramp up. This increase in deceleration feedback influences the aircraft deceleration and, at a level of 4.0 (40%) at 42, the calculated aircraft deceleration equals the required deceleration rate of 13 ft/s/s [3.96 m/s/s].

The left output pressure demand at 42 is calculated as follows. At block A of Fig. 3, the minimum pressure demand at 75% pedal displacement is determined to be 600 psi [4.14 MPa] from the graph 26 of Fig. 4. At block B, the output pedal demand is calculated by subtracting from the input pedal 75% (2,000 psi [13.8 MPa]) the deceleration feedback of 40%, which leaves an output pedal demand of 35% (1,100 psi [7.58 MPa]).

At decision block C, the left output pedal is greater than the minimum pressure demand and, accordingly, the output pedal is set to the minimum pressure demand of 700 psi [4.83 MPa]. For the right pedal, the output pressure demand is calculated by beginning at block A, where the minimum pressure demand at 50% pedal displacement is determined as 400 psi [2.76 MPa] from the graph 26 of Fig. 4. At block B, the output pedal demand is calculated by subtracting from the input pedal 50% (1,000 psi [6.9 MPa]) the deceleration feedback of 40%, which leaves an output pedal demand of 10% (200 psi [1.38 MPa]). At decision block C, since the output pedal is less than the minimum pressure demand, the output pedal is set to the minimum pressure demand of 400 psi [2.76 MPa]. As a consequence, aircraft deceleration is controlled at the required level while preventing the right brake from going into clearance.

From the foregoing, it can be seen that the technique of the invention prevents the discs of a brake disc heat stack from going into clearance, while accommodating differential pilot/co-pilot braking input. A minimum demand variable is produced as a function of the minimum pedal displacement, and such minimum demand is used to calculate a minimum output for the pressure demands of both the left and right pedals. The process presented ensures differential braking may be maintained throughout the braking operation.

Thus it can be seen that the various aspects of the invention have been satisfied by the structure presented above. While only the best known and preferred embodiment of the invention has been presented and described in detail, the invention is not limited thereto or thereby. Accordingly, for an appreciation of the scope and breadth of the invention, reference should be made to the following claims.

## Claims

1. A method for braking an aircraft having right and left brake disc heat stacks controlled by right and left brake pedals, comprising:
determining an actual rate of deceleration of the aircraft (34);
calculating a required rate of deceleration of the aircraft (36, 28);
making a comparison of the actual and required rates of deceleration of the aircraft (38); and
controlling the application and release of brake pressure to the right and left brakes of the aircraft as a function of said comparison while precluding the discs of the heat stacks from going into separation as a consequence of non-braking activities (46, 48, 26), the method **characterized in that** controlling the application and release of brake pressure further includes establishing a minimum brake pressure that ensures the capability of differential braking between the right and left brake pedals and associated right and left brakes (46, 48, 26).

2. The method of claim 1, wherein the establishment of a minimum brake pressure is separately performed for the right and left brakes (46, 48, 26).

3. The method of claim 2, wherein said step of controlling the application and release of brake pressure comprises correlating displacement of the right and left brake pedals with pressure demand (46, 48, 26).

4. The method of claim 3, wherein said step of controlling the application and release of brake pressure comprises correlating displacement of the right and left pedals with required deceleration (28).

5. The method of claim 4, wherein the non-braking activities are taken from the group comprising aerodynamic drag and reverse thrust.

## Patentansprüche

1. Verfahren zum Bremsen eines Flugzeugs mit rechten und linken Bremsscheibenwärmestapeln, die durch rechte und linke Bremspedale gesteuert werden, umfassend:
Bestimmen einer tatsächlichen Verzögerungsrate des Flugzeugs (34);
Berechnen einer erforderlichen Verzögerungsrate des Flugzeugs (36, 28);
Vergleichen der tatsächlichen und erforderlichen Verzögerungsraten des Flugzeugs (38); und
Steuern des Anlegens und Lösens von Bremsdruck auf die rechte und linke Bremse des Flugzeugs als eine Funktion des Vergleichs und gleichzeitiges Verhindern der Trennung der Scheiben der Wärmestapel als Folge von Nichtbremsaktivitäten (46, 48, 26), wobei das Verfahren **dadurch gekennzeichnet ist, dass** das Steuern des Anlegens und Lösens von Bremsdruck ferner die Festlegung eines minimalen Bremsdrucks umfasst, der die Fähigkeit zum Differenzbremsen zwischen dem rechten und dem linken Bremspedal und den zugeordneten rechten und linken Bremsen (46, 48, 26) sicherstellt.

2. Verfahren nach Anspruch 1, wobei die Festlegung eines Mindestbremsdrucks getrennt für die rechte und die linke Bremse (46, 48, 26) durchgeführt wird.

3. Verfahren nach Anspruch 2, wobei der Schritt des Steuerns des Anlegens und Lösens von Bremsdruck das Korrelieren der Verschiebung des rechten und linken Bremspedals mit der Druckanforderung (46, 48, 26) umfasst.

4. Verfahren nach Anspruch 3, wobei der Schritt des Steuerns des Anlegens und Lösens von Bremsdruck das Korrelieren der Verschiebung des rechten und des linken Pedals mit der erforderlichen Verzögerung (28) umfasst.

5. Verfahren nach Anspruch 4, wobei die Nichtbremsaktivitäten aus der Gruppe der Luftwiderstand und des Umkehrschubs ausgewählt werden.

## Revendications

1. Procédé de freinage d'un aéronef comportant des empilements thermiques de disques de frein droit et gauche commandés par des pédales de frein droite et gauche, ledit procédé comprenant les étapes suivantes :
déterminer un taux de décélération réel de l'aéronef (34) ;
calculer un taux de décélération requis de l'aéronef (36, 28) ;
effectuer une comparaison des taux de décélération réel et requis de l'aéronef (38) ; et
commander l'application et le relâchement de la pression de freinage sur les freins droit et gauche de l'aéronef en fonction de ladite comparaison et empêcher en même temps les disques des empilements thermiques de se séparer en conséquence d'activités de non-freinage (46, 48, 26), le procédé étant **caractérisé en ce que** la commande de l'application et du relâchement de la pression de freinage comprend en outre l'établissement d'une pression de freinage minimale qui assure la capacité de freinage différentiel entre les pédales de frein droite et gauche et les freins droit et gauche associés (46, 48, 26).

2. Procédé selon la revendication 1, l'établissement d'une pression de freinage minimale étant effectué séparément pour les freins droit et gauche (46, 48, 26).

3. Procédé selon la revendication 2, ladite étape de commande de l'application et du relâchement de la pression de freinage comprenant la corrélation du déplacement des pédales de frein droite et gauche avec la demande de pression (46, 48, 26).

4. Procédé selon la revendication 3, ladite étape de commande de l'application et du relâchement de la pression de freinage comprenant la corrélation du déplacement des pédales droite et gauche avec la décélération requise (28).

5. Procédé selon la revendication 4, les activités de non-freinage étant prises dans le groupe comprenant la traînée aérodynamique et la poussée inverse.
